# FASCICULE DE BREVET EUROPEEN

(11) **EP 0 329 212 B1**
(45) Date de publication et mention de la délivrance du brevet: **03.08.1994**
(21) Numéro de dépôt: 89200173.6
(22) Date de dépôt: 27.01.1989
(51) Int. Cl.: B23K 35/363

(54) **Flux à souder**
Weichlotflussmittel
Soldering flux

(30) Priorité: 16.02.1988 BE 8800187
(43) Date de publication de la demande: 23.08.1989
(73) Titulaire: INTERFLUX ELECTRONICS N.V., B-9042 Gent (BE)
(72) Inventeur: Werkhoven,Daniel, B-2020 Antwerpen (BE)
(74) Mandataire: Ottelohe, Jozef René

(56) Documents cités:
- EP-A- 0 090 960
- EP-A- 0 184 825
- WO-A-85/05307
- CH-A- 596 935
- DE-A- 2 114 927
- FR-A- 2 524 248
- US-A- 3 305 406

## Description

L'invention concerne un flux à souder à point de fusion plus bas et d'une autre composition que celle de la matière de base à assembler ou à souder et qui est particulièrement appropriée pour la réalisation de connexions électriques dans l'électronique et la technique d'installation, plus spécialement pour le soudage mécanique de circuits imprimés.

Des flux à souder qui contiennent, entre autres, une résine qui agit en tont que liant, sont connus. Ces flux à souder ont cependant pour principaux inconvénients que sur des points de contact soudés au moyen de celui-ci dans des circuits imprimés à composantes il se forme un film de résidus qui aboutit rapidement à un encrassement, par suite de quoi des problèmes de contact peuvent surgir et l'aspect visuel des circuits imprimés subit un dommage. Pour y remédier tant soit peu, on est obligé de faire usage d'un processus de nettoyage.

De la demande de brevet EP-A-0184825 il est connu un flux à souder comportant un activateur tel qu'un acide organique non hygroscopique, du colophonium une autre résine ou un succédané, et 0,2 à 3% en poids d'un agent moussant.

De la demande de brevet DE-A-2114927, il est connu un flux à souder comportant 0,5 à 25% en poids d'acide adipique et plusieurs alcools avec un point d'ébullition qui est de 70 à 30°C inférieur à la température de soudure.

Pour prévenir ces inconvénients, selon la principale caractéristique de l'invention, il n'est plus fait usage de résine et le flux à souder se compose de 1 à 10 % d'acide mono- ou polycarboxylique aliphatique, non hygroscopique, à point de fusion situé entre 60 et 180°C et à point d'ébullition situé entre 200 et 400°C, de 90 à 99 % de solvants se composant d'un mélange d'alcools monohydriques et d'ester acétique à point d'ébullition inférieur à 200°C, le restant étant formé par un agent moussant organique.

Ce nouveau flux à souder a donc les grands avantages que la qualité des points de soudure est optimale pour obtenir de bons points de contact, qu'il ne se produit plus de problèmes de contact, que le nettoyage des circuits imprimés achevés est superflu, que la protection des circuits imprimés pendant le soudage est optimale et que lors de la manipulation des circuits imprimés il ne se produit aucun effet d'adhésion.

De très bons résultats sont obtenus pour la production d'un flux à souder à poids spécifique situé entre 0,8 et 0,820 à 20°C, si l'acide organique non hygroscopique se compose d'un acide mono- ou polycarbonique aliphatique et si les solvants se composent d'un mélange d'alcools monohydriques et d'ester acétique. Les alcools monohydriques peuvent, par exemple, être choisis parmi le méthanol, l'éthanol, l'alcool isopropylique, de butanol.

Il va de soi que l'acide mono- ou polycarbonique aliphatique, le mélange d'alcools monohydriques avec un ester acétique, et l'agent moussant, peuvent se composer de n'importe quelles matières.

## Revendications

1. Flux à souder se composant d'un activateur, d'un solvant et d'un agent moussant organique et ne comportant pas de résine, ce flux se composant, de 1 à 10 % d'acide mono- ou polycarboxylique aliphatique, non hygroscopique, à point de fusion situé entre 60 et 180°C et à point d'ébullition situé entre 200 et 400°C, de 90 à 99 % de solvants se composant d'un mélange d'alcools monohydriques et d'ester acétique à point d'ébullition inférieur à 200°C, le restant étant formé par l'agent moussant.

2. Flux à souder conforme à la revendication 1, caractérisé par le fait que les alcools monohydriques sont choisis parmi le méthanol, l'alcool isopropylique, l'ethanol ou le butanol.

## Claims

1. Soldering flux consisting of an activator, a solvent and an organic foaming agent and not containing any resin, this flux consists of 1 to 10 % non hygroscopic monopolycarboxylic or polycarboxylic aliphatic acid with a melting point of between 60 and 180°C and a boiling point between 200 and 400°C, and 90 to 99 % solvents consisting of a mixture of monohydric alcohols and acetic ester with a boiling point below 200°C, the remainder being the foaming agent.

2. Soldering flux in accordance with claim 1, characterized by the fact that the monohydric alcohols are either methanol, isopropyl alcohol, ethanol, or butanol.

## Patentansprüche

1. Lötflussmittel, bestehend aus einem Aktivator, einem Lösungsmittel und einem organischen Schaummittel und nicht harzhaltig, welches Lötflussmittel 1 bis 10-prozentual aus aliphatischer, nichthygroskopischer Mono- oder Polykarboxylsäure mit einem Schmelzpunkt von 6 bis 180°C und einem Siedepunkt von 200 bis 400°C, sowie 90 bis 99-prozentual aus Lösungsmitteln in der Form eines Gemisches monohydrischer Alkohole und eines Acetatesters, dessen Siedepunkt niedriger als 200°C ist, besteht, wobei die Restmenge aus dem Schaummittel besteht.

2. Lötflussmittel gemäss dem Anspruch 1, dadurch gekennzeichnet, dass die monohydrischen Alkohole aus der Reihe des Methanols, Isopropylalkohols, Athanols oder Butanols gewählt werden.
